# EUROPEAN PATENT SPECIFICATION

(11) **EP 2 844 679 B1**
(45) Date of publication and mention of the grant of the patent: **12.07.2017**
(21) Application number: 13723321.9
(22) Date of filing: 01.05.2013
(51) Int. Cl.: C08F 214/06, C08F 8/20, C08L 27/06, C08L 27/24

(54) **SELF LUBRICATED CPVC RESIN WITH IMPROVED PROPERTIES**
SELBSTSCHMIERENDES CPVC-HARZ MIT VERBESSERTEN EIGENSCHAFTEN
RÉSINE DE CPVC AUTO-LUBRIFIÉE PRÉSENTANT DES PROPRIÉTÉS AMÉLIORÉES

(30) Priority: 01.05.2012 US 201261640741 P
(43) Date of publication of application: 11.03.2015
(73) Proprietor: Lubrizol Advanced Materials, Inc., Cleveland, OH 44141-3247 (US)
(72) Inventor: ZOOK, Christopher D., Cleveland, Ohio 44141-3427 (US); VIELHABER, Robert G., Cleveland, Ohio 44141-3427 (US)
(74) Representative: dompatent von Kreisler Selting Werner - Partnerschaft von Patent- und Rechtsanwälten mbB
(86) International application number: PCT/US2013/039004
(87) International publication number: WO 2013/166107

(56) References cited:
- EP-A2- 0 421 150
- WO-A1-2007/121046
- FR-A- 1 525 421
- GB-A- 950 769
- GB-A- 1 247 726

## Description

### The present invention relates to an extruded pipe comprising a compound comprising a chlorinated vinylchloride copolymer resin.

### BACKGROUND OF THE INVENTION

The disclosed technology relates to a plastic compound suitable for preparing articles, such as pipe, with good physical properties, such as impact strength, and resistance to environmental stress cracking (ESC). In particular, the technology relates to a vinyl chloride copolymer resin, which includes chlorinated polyvinyl chloride copolymer and polyvinyl chloride copolymer that maintains suitable processability at molecular weights above which vinyl chloride homo-polymer resins flow with difficulty or will not fuse. Furthermore, the invention relates to vinyl chloride copolymer compounds containing the vinyl chloride copolymer resin, and articles made from such compounds, which compounds meet 23447 cell classifications under ASTM D1784.

Polyvinyl chloride (PVC) is a vinyl chloride polymer having about 57 mol% chlorine bound along a polymerized ethylene backbone. Chlorinated polyvinyl chloride (CPVC) is a post-chlorinated form of PVC typically having greater than 57 mol% bound chlorine. CPVC is known to have excellent high temperature performance characteristics, among other desirable physical properties.

CPVC is an important specialty polymer due to its high glass transition temperature, high heat deflection temperature, outstanding flame and smoke properties and chemical inertness. While the glass transition temperature of the CPVC generally increases as the amount of chlorine increases, increased chlorine content causes the CPVC to become more difficult to process and products made therefrom to become more brittle. In this regard, it is known that CPVC resins generally have low impact properties and often require compounding with impact modifiers.

It is also known that CPVC resins are subject to environmental stress cracking. Many polymeric materials, loaded mechanically and immersed in certain kinds of liquids, undergo failures by crazing and/or cracking. The loads required are much less than those required of failures in air. The failure promoting liquids are non-solvents and chemically inert for polymers. Failures like these are called environmental stress crazing (ESCR), environmental stress cracking (ESC), and environmental stress failure (ESF) which includes both.

In simple terms, ESC occurs from an external or internal crack in a plastic caused by tensile stresses less than the plastic's short term mechanical strength, resulting in failure. The addition of an organic liquid (the environment) with the applied stress can result in ESC failures. In essence, the organic liquid wets the surface of the polymer and in combination with the tensile stress, accelerates the failure rate. This phenomenon was identified as far back as the 1940s in the general thermoplastics field.

Currently in the field of CPVC pipe, recommendations are in place on construction practices that will limit contact of the CPVC pipe with incompatible materials. However, a more fundamental approach for improving the resistance to ESC for CPVC articles is desired.

Higher Mw polymers are difficult, if not impossible to process into useful final products. In particular, compound made from standard CPVC resin either flows with difficulty or will not fuse properly at high Mw, for example, of much greater than 150,000 daltons, without levels of lubricant that negatively affect other properties of the final product, such as impact strength.

It has been taught that compounds comprised of chlorinated PVC-ethylene copolymers can be employed to produce optically clear final products, such as pipe, for example, as taught in U.S. Patent No. 7,943,691 to Shakir et al., issued May 17, 2011. These copolymers are only taught to be employed at molecular weights of up to 150,000, and there is no discussion of the impact properties or resistance to ESC of the compounds. In fact, the general state of the art would have led those of ordinary skill desiring to extrude optically clear CPVC compounds according to the '691 patent to ensure the molecular weight of the resin taught in the '691 patent did not approach, let alone exceed 150,000 daltons.

EP0421150 discloses a method comprising polymerizing vinyl chloride and a vinyl component comonomer in a minor amount to form a copolymer, and chlorinating said copolymer to obtain a chlorinated vinyl chloride copolymer having an inherent viscosity (IV) from 0.2 to 1.4.

GB1247726 discloses a composition which comprises (a) a copolymer of vinyl chloride and propylene having an inherent viscosity from 0.55 to 1.60 and (b) particles of a composite modifier to the extent of less than 10% by weight uniformly dispersed in (a).

GB950769 discloses a copolymer of vinyl chloride and a minor amount of vinyl acetate having a K value of 84.5.

A CPVC resin that can be readily processed and that can be employed in a CPVC compound to produce a final product having improved resistance to environmental stress cracking, with at least maintained or improved impact strength over traditional CPVC compounds, and meeting cell class 23447 under ASTM D1784 would be desirable.

### SUMMARY OF THE INVENTION

The present invention relates to an extruded pipe comprising a compound comprising a chlorinated vinyl chloride copolymer resin comprising a major portion of vinyl chloride monomer and a minor portion of a vinyl component co-monomer, wherein said chlorinated vinyl chloride copolymer resin has a weight average molecular weight of greater than 150,000 Daltons.

Preferred embodiments of the invention are apparent from the dependent claims. The present invention further relates to a method of imparting processability to a chlorinated vinyl chloride polymer resin having an Mw of greater than 150,000 Daltons comprising preparing the chlorinated vinyl chloride polymer resin from vinyl chloride co-monomer and ethylene co-monomer, wherein the ethylene co-monomer comprises from 0.01 % to 8 % of the co-monomers in the vinyl chloride copolymer resin, and post-chlorinating the resultant polymer.

Surprisingly, the inventors have discovered that vinyl chloride copolymer resins, in particular CPVC-vinyl copolymer resins, having weight average molecular weights of greater than 150,000 daltons can maintain suitable processability at molecular weights above which vinyl chloride homo-polymer resins either flow with difficulty or do not fuse properly. Even more surprising and contrary to expectation, compounds employing such resins provide impact strength at least equivalent, and often improved over that provided by standard (molecular weight below 150,000) vinyl chloride compounds. Likewise, the compounds employing such resins exhibit much improved chemical stability over standard vinyl chloride compounds.

Thus, one aspect of the disclosure relates to a chlorinated vinyl chloride copolymer resin. The chlorinated vinyl chloride copolymer resin comprises a major portion of vinyl chloride monomer and a minor portion of a co-monomer selected from, for example, ethylene, propylene, and isobutylene, or mixtures thereof. The chlorinated vinyl chloride copolymer resin has a weight average molecular weight of greater than 150,000 daltons.

In certain embodiments of the chlorinated vinyl chloride copolymer resin, the co-monomer can be present at from 0.01% to 10% of the total monomers in the chlorinated vinyl chloride copolymer resin. Likewise, in certain embodiments, the chlorinated vinyl chloride copolymer resin can have a chlorine content of between 57 wt.% and 70 wt.%, and preferably the chlorinated vinyl chloride copolymer resin can be a UV-chlorinated resin.

In another aspect of the disclosure, there is provided a chlorinated vinyl chloride copolymer compound comprising the chlorinated vinyl chloride copolymer resin described above.

In one embodiment of the chlorinated vinyl chloride copolymer compound, the chlorinated vinyl chloride copolymer resin can be present at from 78 wt.% to 92 wt.% of the total compound.

In another embodiment, the chlorinated vinyl chloride copolymer compound can additionally comprise a low weight average molecular weight (Mw) chlorinated vinyl chloride (co)polymer resin having an Mw of **150,000 daltons or less** in a blend with the chlorinated vinyl chloride copolymer resin, and wherein the average Mw of the resin blend is greater than 150,000 daltons.

### DETAILED DESCRIPTION OF THE INVENTION

Various preferred features and embodiments will be described below.

One aspect of the present disclosure is a vinyl chloride copolymer resin. Copolymer, or polymers as a case may be, are derived from the successive "linking" of monomers in a polymerization reaction. By linking, it is meant that the monomers become bonded together. The linking of monomers requires alteration of the chemical structures of the monomers for the purpose of freeing a bond the monomers can use to link by.

For example, the chemical structure of ethylene monomer is two CH₂ units connected by a double bond;

H₂C=CH_{2.}

When ethylene monomers are polymerized, or linked, the double bond is opened and becomes free to bond with another ethylene monomer; 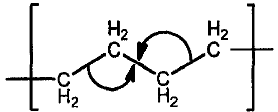 or otherwise represented as a repeating unit;

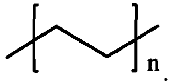

As can be seen, the repeating polyethylene unit is different from the starting ethylene monomer in that the double bond of the ethylene monomer has been opened. Although the polyethylene repeat unit is altered from the ethylene monomer from which it was derived, it is a common practice in the art of polymer plastics to refer to the repeating units of the polymer by the same name as the monomer. So, ethylene monomer refers both to CH₂=CH₂ and the polymerized repeat unit -[CH₂-CH₂]ₙ-, where n is the number of repeat units in the polymer. Likewise, ethylene units or blocks of ethylene in the polymer means units or blocks derived from ethylene monomer. Similarly, styrene units or blocks of styrene in the polymer means units or blocks derived from styrene monomer, and so on for other types of monomers.

Those of ordinary skill in the art recognize that the polymerized monomer will be of altered chemical structure, but understand the relation between the repeat unit and the monomer from which the repeat unit was derived. Thus, as used in the description below and in the claims, monomer will refer both to a repeat unit of a polymer derived from the monomer, as well as the stand-alone monomer itself.

Accordingly, vinyl chloride monomer refers both to vinyl chloride monomer and the repeat unit derived from vinyl chloride monomer:

| Vinyl chloride monomer | Repeat unit derived from vinyl chloride monomer |
|---|---|
| 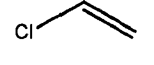 | 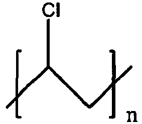 |

The vinyl chloride copolymer resin can comprise a major portion of vinyl chloride co-monomer and a minor portion of a vinyl component co-monomer. In addition, the vinyl chloride copolymer resin can have a weight average molecular weight of greater than 150,000 daltons.

In one embodiment, from 90% to 99.99% of the co-monomers in the vinyl chloride copolymer resin can be vinyl chloride monomers, and preferably from 91%, or 92% to 99.9%, or 99.5% vinyl chloride monomers. In certain embodiments, the co-monomers in the vinyl chloride copolymer resin can be from 93%, or 94% to 99% vinyl chloride monomers, and often from 95% to 98% vinyl chloride monomers.

The remainder of the co-monomers in the vinyl chloride copolymer resin can be one or more vinyl component co-monomers, or mixtures thereof. That is, from 0.01% to 10% of the co-monomers in the vinyl chloride copolymer resin can be vinyl component monomers, or from 0.1%, or 0.5% to 9%, or 8% vinyl component monomers. In certain embodiments, the vinyl component co-monomer can be from 1% to 6%, or 7%, or more preferably, from 2% to 5% of the total co-monomers in the vinyl chloride copolymer resin.

By the term "vinyl component co-monomer" it is meant a vinyl type monomer other than vinyl chloride. Such monomers are well known to the art and to the literature and include esters of acrylic acid wherein the ester portion has from 1 to 12 carbon atoms, for example, methyl acrylate, ethyl acrylate, butyl acrylate, octyl acrylate, cyanoethyl acrylate, and the like; vinyl acetate; and vinyl aliphatic esters containing from 3 to 18 carbon atoms; esters of methacrylic acid wherein the ester portion has from to 12 carbon atoms, such as methyl methacrylate, ethyl methacrylate, butyl methacrylate, and the like; styrene and styrene derivatives having a total of from 8 to 15 carbon atoms such as alpha-methylstyrene, vinyl toluene, chlorostyrene; vinyl naphthalene; diolefins having a total of from 4 to 8 carbon atoms such as butadiene, isoprene, and including halogenated diolefins such as chloroprene; monoolefins having from 2 to 10 carbon atoms and preferably 2 to 4 carbon atoms such as ethylene, propylene and isobutylene; and mixtures of any of the above types of monomers and other vinyl monomers co-polymerizable therewith known to the art and to the literature. In a preferred embodiment, the vinyl component co-monomer can be ethylene, propylene or isobutylene, and most preferably, ethylene.

The vinyl chloride copolymer resin can be polymerized according to known polymerization methods. In one embodiment, the vinyl chloride copolymer resin may be post-chlorinated, that is, chlorinated after polymerization of the vinyl chloride co-monomer and vinyl component co-monomer. Post-chlorinated, or simply chlorinated vinyl chloride copolymer resin can conveniently be made by the chlorination of vinyl chloride copolymer by any one of several available methods including a solution process, a fluidized bed process, a photo-slurry process, a thermal process or a liquid chlorine process. Examples of these processes can be found in U.S. Pat. Nos. 2,996,489; 3,100,762; 4,412,898; 3,532,612; 3,506,637; 3,534,013; 3,591,571; 4,049,517; 4,350,798; and 4,377,459. In a preferred embodiment, chlorinated vinyl chloride copolymer resin can be made by a UV chlorination process, i.e., the chlorinated vinyl chloride is a UV-chlorinated resin. Likewise, in a preferred embodiment, no swelling agent is employed when chlorinating the resin.

The vinyl chloride copolymer resin may be post-chlorinated to a chlorine level of from between 57 wt.% to 70 wt.%. Preferably, the vinyl chloride copolymer resin can be chlorinated from between 60 wt.% and 69 wt.%, more preferably from between 63 wt.% and 68 wt.%, and most preferably from between 66 wt.% and 67 wt.%. It is to be appreciated that where the vinyl chloride copolymer is post-chlorinated, both co-monomers in the copolymer will be affected, thereby reducing the measurable amount of vinyl component co-monomer. Thus, reference to the amount of co-monomer in the resin is done on a basis of non-post-chlorination.

The chlorinated vinyl chloride copolymer resin can be employed in a (chlorinated) vinyl chloride copolymer compound, prepared, for example, according to the methods taught in the "Encyclopedia of PVC," Second Edition; Leondard I. Nass, Charles A. Heiberger or the "PVC Handbook," Charles E. Wilkes, James W. Summers, Charles Anthony Daniels, Mark T. Berard. As used herein, reference to "chlorinated" means the material encompasses both non-post-chlorinated and post-chlorinated embodiments.

In one embodiment, the chlorinated vinyl chloride copolymer compound can contain the chlorinated vinyl chloride copolymer resin from 78 wt.% to 92 wt.% of the total chlorinated vinyl chloride copolymer compound. In another embodiment, the chlorinated vinyl chloride copolymer compound can contain the chlorinated vinyl chloride copolymer resin from 82 wt.% to 88 wt.%, and in another embodiment from 84 wt.% to 86 wt.% of the total chlorinated vinyl chloride copolymer compound.

The chlorinated vinyl chloride copolymer compound can additionally include chlorinated vinyl chloride polymer or copolymer resin having an Mw of 150,000 daltons or less. In such an embodiment, the average Mw of the blended resins in the compound will be greater than 150,000 daltons. The chlorinated vinyl chloride polymer or copolymer resin of 150,000 daltons or less herein is referred to as low Mw chlorinated vinyl chloride (co)polymer resin. Preferably, the chlorinated vinyl chloride copolymer compound will contain little to no low Mw chlorinated vinyl chloride (co)polymer resin. However, in some embodiments, the vinyl chloride copolymer compound can contain a ratio of greater than 1:4 or 1:3 chlorinated vinyl chloride copolymer resin to low Mw chlorinated vinyl chloride (co)polymer resin. In some embodiments, the chlorinated vinyl chloride copolymer compound can contain a ratio of greater than 1:2 or 1:1 chlorinated vinyl chloride copolymer resin to low Mw chlorinated vinyl chloride (co)polymer resin. Often the ratio of chlorinated vinyl chloride copolymer resin to low Mw chlorinated vinyl chloride (co)polymer resin can be from 1:4 to 4:1. As with the term "chlorinated", the term "(co)" in (co)polymer means the polymer encompasses both homopolymers and copolymers.

The chlorinated vinyl chloride copolymer compound can additionally comprise other additives, such as those taught in the "Encyclopedia of PVC," Second Edition; Leondard I. Nass, Charles A. Heiberger or the "PVC Handbook," Charles E. Wilkes, James W. Summers, Charles Anthony Daniels, Mark T. Berard. For example, the chlorinated vinyl chloride copolymer compound can additionally comprise additives such as lubricants, impact modifiers, heat stabilizers or any other conventional additive. Ordinarily, a small amount of another resin or rubber, e.g., chlorinated polyethylene, styrene-acrylonitrile copolymer, or chlorinated isobutylene is blended with CPVC resin to improve its shock resistance and mechanical processability, and such additives are contemplated for the chlorinated vinyl chloride copolymer compound. Pigments, stabilizers, fillers, colorants, UV-stabilizers, and other processing aids, as well as other additives such as biocides or flame retardants, and any other plastic additive can also be incorporated in the chlorinated vinyl chloride copolymer compound.

The chlorinated vinyl chloride copolymer compound can be processed into an article by generally accepted methods. For example, the chlorinated vinyl chloride copolymer compound can be molded, extruded, extruded and machined, or processed by any other known method.

In a preferred embodiment, the chlorinated vinyl chloride copolymer compound can be processed into pipe, pipe fittings, and valves, with particular utility in the production of hot water piping for industrial and domestic use. The chlorinated vinyl chloride copolymer compound can also be employed, for example, to produce building products, such as siding, fencing or fenestration products, irrigation products, pool and spa products, electrical application products, HVAC application products, furniture, and as drawn sheets for custom applications. In addition, the chlorinated vinyl chloride copolymer compound can be useful in the rigid vinyl field for the manufacture of other articles, such as, for example, ductwork, tanks, appliance parts, etc., especially where the products will handle or contact hot water and other hot or corrosive liquids.

The chlorinated vinyl chloride copolymer compound when properly extruded and formed desirably meets or exceeds the requirements of ASTM D 1784 cell class 23447 and provides long term performance and reliability, including a high degree of safety over continuous use. The first numeral "2" in the cell class specifies CPVC pipe; the second numeral (whether "3" or "4") specifies the level of notched Izod impact strength ("3" indicates at least 80.1 J/m (1.5 ft.lb/in) of notch, "4" indicates at least 266.9 J/m (5 ft.lb/in) of notch); the third numeral "4" specifies tensile strength of at least 48.3 MPa (7,000 psi); the fourth numeral "4" specifies tensile modulus of at least 2482 MPa (360,000 psi); and the fifth numeral "7" specifies the level of distortion temperature under load (DTUL) or heat deflection temperature (HDT) measured under 1.82 MPa (264 psi) load. Numeral "7" indicates DTUL or HDT of at least 100°C (see ASTM D1784).

One aspect of the present disclosure is a chlorinated vinyl chloride copolymer resin that flows or fuses at Mws greater than can be achieved by standard chlorinated vinyl chloride homo-polymer resin. For example, including the chlorinated vinyl chloride copolymer resins in a CPVC or PVC compound can maintain acceptable dynamic thermal stability torque (DTS-torque) for the compound compared to a CPVC or PVC compound of a homopolymer of the same Mw as the copolymer. DTS-torque of the compound can be one measure of the flow of the compound including the resin during processing, such as melt-extrusion. DTS-torque characterizes the level of torque required to mix the compound once the resin fuses. The lower the DTS-torque, the more processable the compound. Preferably, the DTS-torque can be less than 3600 meter-grams (m·g) as measured according to ASTM D-2538, or less than 3500 m·g, or less than 3400 m·g when the chlorinated vinyl chloride copolymer resin has molecular weights greater than 150,000 daltons, and even more preferably greater than 175,000 daltons, and even greater than 200,000 daltons.

In certain embodiments, the DTS torque of a compound containing the chlorinated vinyl chloride copolymer resin in the 150,000 Mw category can be less than 5% reduced compared to the same compound containing CPVC or PVC homopolymer resin in the 150,000 Mw category, or in some cases less than 3%, or less than 1%. By "150,000 Mw category" it is meant to include Mw between 140,000 and 160,000. At the 175,000 Mw category, the DTS torque of a compound containing the chlorinated vinyl chloride copolymer resin can be from 0.01% to 15% reduced compared to the same compound containing a CPVC or PVC homopolymer resin in the 175,000 Mw category, or from 0.5% to 10% reduced, or from 1% to 8% reduced. By "175,000 Mw category" it is meant Mw between 160,000 and 180,000. At higher Mw categories, the DTS of the compound containing (chlorinated) vinyl chloride copolymer resin can be greater than 1%, 5%, or greater than 10%, or from 1% to 50% reduced compared to the same compound containing a CPVC or PVC homopolymer resin, or from 5% to 40% reduced, or from 10% to 30% reduced. More particularly, the DTS torque of a compound containing a chlorinated vinyl chloride copolymer resin as described herein will not increase at the same rate as the same compound containing a CPVC or PVC homopolymer resin, and preferably will stay steady or decrease, as the Mw of the resin increases.

Resistance to environmental stress cracking can be determined according to ISO 22088 (equivalent to ASTM F2331). At a stress of 27.6 MPa (4000 psi) with corn oil applied and at a temperature of 23°C, articles prepared from the compound comprising non-blended copolymer resin ("non-blended compound" i.e., the resin in the compound is more than 98% by weight the chlorinated vinyl chloride copolymer resin) can exhibit a time to failure (ttf) of at least 1.25 times the number of hours as exhibited by the same compound containing a CPVC or PVC homopolymer resin having an Mw of 150,000 daltons or less. In another embodiment, the non-blended compound can achieve at least 1.5 or at least 2 times the number of hours, and in another embodiment, it can achieve at least 2.5 or 3 times the number of hours to failure as exhibited by the same compound containing a CPVC or PVC homopolymer resin having an Mw of 150,000 daltons or less. In blended compounds, (i.e., compounds comprising both chlorinated vinyl chloride copolymer resin and low Mw chlorinated vinyl chloride (co)polymer resin) the effect of the low Mw resin will reduce the ESC ttf, but the blended compound will still be expected to exhibit a greater ttf due to the presence of the chlorinated vinyl chloride copolymer resin.

In another aspect of the invention the chlorinated vinyl chloride copolymer resins and chlorinated vinyl chloride copolymer compounds can be employed to maintain or improve impact strength as measured by the Izod or staircase methods. "Impact Strength" refers to the amount of force an article can withstand before fracturing. More specifically, the Izod impact test I provides a laboratory measurement of the impact strength of a material by determining its maximum ability to absorb an impulse load, whereas the falling tup or staircase impact test provides a measurement of the impact strength for a material when extruded into pipe and encompasses both the material's impact strength and ductility.

Notably, the chlorinated vinyl chloride copolymer resins and compounds described herein can maintain suitable impact strength so as to maintain an article produced therefrom in the same class as if produced from the homopolymer. In fact, the chlorinated vinyl chloride copolymer resins and compounds can pass impact strength tests at Mw at which CPVC and PVC homopolymer resins and compounds cannot be processed.

Extrudate pipe and molded fittings for such pipe made using a chlorinated vinyl chloride copolymer compound of the present invention that has at least equivalent, if not better impact strength than a homopolymer compound, and improved chemical resistance provides considerable advantages to one constructing or maintaining, for example, industrial pipes. With maintained impact strength and improved chemical resistance, the compound can be employed to produce pipe that can withstand environmental stress factors for a longer period of time than standard pipe.

It is known that some of the materials described above may interact in the final formulation, so that the components of the final formulation may be different from those that are initially added. The products formed thereby, including the products formed upon employing the composition of the present invention in its intended use, may not be susceptible of easy description.

### EXAMPLES

### DTS EXAMPLES

### Resins

A number of resins are tested at varying Mw. Two resins are evaluated for each Mw category and the average C1% is provided in the table.

| Table 1 | | | | | |
|---|---|---|---|---|---|
| Sample | % CPVC | Co-monomer | %Co-monomer | C1% | Mw |
| (control)1 | 100.0 | - | 0 | 66.7 | 117,000 |
| (control)2 | 100.0 | - | 0 | 66.7 | 146,000 |
| (control)3 | 100.0 | - | 0 | 66.6 | 166,400 |
| (control)4 | 100.0 | - | 0 | 66.6 | 191,500 |
| (control)5 | 100.0 | - | 0 | 66.6 | 310,900 |
| 6 | 98.4 | ethylene | 1.6 | 66.9 | 148,000 |
| 7 | 97.7 | ethylene | 2.3 | 66.8 | 173,600 |
| 8 | 97.8 | ethylene | 2.2 | 66.9 | 208,000 |
| 9 | 96.8 | ethylene | 3.2 | 66.7 | 291,200 |

### Compounds

Compounds for testing DTS are prepared according to the formulations in Table 2. Table 2 shows that compounds containing copolymer resins follow a trend of decreasing DTS as Mw increases whereas compounds containing homopolymer resins follow a trend of increasing DTS as Mw increases.

Table 2 also shows that Izod impact strength of the compounds containing the copolymers are at least maintained and trend to improvement compared to compounds containing homopolymer as Mw increases above 150,000.

| Table 2 | **CompEx. 1** | **Ex**. **1** | **CompEx. 2** | **Ex. 2** | **CompEx. 3** | **Ex. 3** | **CompEx. 4** | **Ex. 4** |
|---|---|---|---|---|---|---|---|---|
| | Sample 2 | Sample 6 | Sample 3 | Sample 7 | Sample 4 | Sample 8 | Sample 5 | Sample 9 |
| Parts Resin | 100 | 100 | 100 | 100 | 100 | 100 | 100 | 100 |
| Stabilizers | 2.65 | 2.65 | 2.65 | 2.65 | 2.65 | 2.65 | 2.65 | 2.65 |
| Impact Modifier | 9 | 9 | 9 | 9 | 9 | 9 | 9 | 9 |
| Lubricant Package | 2.25 | 2.25 | 2.25 | 2.25 | 2.25 | 2.25 | 2.25 | 2.25 |
| Filler | 4 | 4 | 4 | 4 | 4 | 4 | 4 | 4 |
| DTS-torque | 3585 | 3576 | 3717 | 3422 | 3934 | 3541 | 4176 | 3212 |
| % reduction DTS | 0.2% | | 7.9% | | 10.0% | 10.0% | 22.9% | |
| Izod impact (ft-lbs) | 14.7 | 13.6 | 14.5 | 13.3 | 13.4 | 14.0 | 11.3 | 12.2 |
| Staircase (ft-lbs) 30°F/73°F** | 20/42 | 21/46 | - | 17/33 | 5/20 | 9/20 | Cannot extrude | 8/10 |

| | | | | | | | | |
|---|---|---|---|---|---|---|---|---|
| *** 1 ft-lbs = 1.36 J** **** 30 °F = -1.11 °C/73 °F = 22.8 °C** | | | | | | | | |

DTS-torque method - Using a Brabender with a mixing head, a compound is added to the machine at 205-210°C and the torque and temperature are measured over time. The torque rises quickly to a maximum for the fusion peak and then drops and maintains a median torque until the resin degrades to a point when it starts to crosslink. After the torque rises 100 meter-grams above the minimum torque, the stability time is taken.

Izod impact strength method - Plaques are prepared from the sample compound and **6.35 mm or 3.175 mm** (¼ or 1/8 inch) thick samples are cut and grooved. A pendulum that is weighted is released and strikes the notch. The results are measured as foot pounds of force required to break or partially break the bar.

Staircase method - the sample compounds are extruded into pipe. A weight is held a predetermined distance above the pipe and allowed to drop on the pipe. The results are measured as foot pounds of force required to break or partially break the pipe.

### ESC EXAMPLES

Compounds for ESC-ttf are prepared according to the formulations in Tables 4 and 5.

| | Table 4 | CompEx. 5 | Ex. 5 | Ex. 6 | Ex. 7 | Ex. 8 |
|---|---|---|---|---|---|---|
| | | Sample 2 | Sample 6 | Sample 7 | Sample 8 | Sample 9 |
| Parts | Resin | 100 | 100 | 100 | 100 | 100 |
| | Stabilizers | 2.4 | 2.4 | 2.4 | 2.4 | 2.4 |
| | Impact Modifier | 8 | 8 | 8 | 8 | 8 |
| | Lubricant Package | 2.25 | 2.25 | 2.25 | 2.25 | 2.25 |
| | Filler | 4.01 | 4.01 | 4.01 | 4.01 | 4.01 |
| | DTS-torque, mg | 3115 | -- | 3129 | 3411 | 3484 |
| | Notch Izod Impact (ft-lbs)* | | | | | |
| | Tensile Strength, psi** | | | | | |
| | Tensile Modulus, kpsi | | | | | |
| | Heat Deflection Temperature, F | | | | | |
| | ESC-ttf (times better than control) | 1.0 | - | 1.89 | 3.12 | 3.75 |

| | | | | | | |
|---|---|---|---|---|---|---|
| *** 1 ft-lbs = 1.36 J** **** 1 psi = 6890 Pa** | | | | | | |

ESC-ttf method - Measured according to ISO 22088 with corn oil at a temperature of 23°C and a stress of **27.6 MPa** (4000 psi).

### Blended Compounds

A blended compound is prepared according to the formulations in Table 5.

| Table 5 | CompEx. 5 | Ex. 9 | Ex.10 | Ex.11 | Ex.12 | Ex. 13. | Ex. 14 |
|---|---|---|---|---|---|---|---|
| Ingredients | Parts | Parts | Parts | Parts | Parts | Parts | Parts |
| Sample 1 | -- | -- | -- | -- | -- | 50 | 50 |
| Sample 2 | 100 | 75 | 75 | 50 | 50 | -- | -- |
| Sample 7 | -- | 25 | -- | -- | -- | -- | -- |
| Sample 8 | -- | -- | -- | 50 | -- | 50 | -- |
| Sample 9 | -- | -- | 25 | -- | 50 | -- | 50 |
| Stabilizers | 2.4 | 2.4 | 2.4 | 2.4 | 2.4 | 2.4 | 2.4 |
| Impact Modifier | 8 | 8 | 8 | 8 | 8 | 8 | 8 |
| Lubricant Package | 2.25 | 2.25 | 2.25 | 2.25 | 2.25 | 2.25 | 2.25 |
| Filler | 4.01 | 4.01 | 4.01 | 4.01 | 4.01 | 4.01 | 4.01 |
| DTS-torque, mg | 3115 | 3176 | 3298 | 3573 | 3676 | 3221 | 3608 |
| Notch Izod Impact (ft-lbs)* | | | | | | | |
| Tensile Strength, psi** | | | | | | | |
| Tensile Modulus, kpsi | | | | | | | |
| Heat Deflection Temperature, F | | | | | | | |
| ESC-ttf (hours) | 1.0 | 1.16 | 1.44 | 1.41 | 1.52 | 1.31 | 1.63 |

| | | | | | | | |
|---|---|---|---|---|---|---|---|
| *** 1 ft-lbs = 1.36 J ** 1 psi = 6890 Pa** | | | | | | | |

ESC-ttf method - Measured according to ASTM 2293 with corn oil at a temperature of 23°C and a stress of **27.6 MPa (4000 psi).**

As used herein, the expression "consisting essentially of" permits the inclusion of substances that do not materially affect the basic and novel characteristics of the composition under consideration.

## Claims

1. An extruded pipe comprising a compound comprising a chlorinated vinyl chloride copolymer resin comprising a major portion of vinyl chloride monomer and a minor portion of a vinyl component co-monomer, wherein said chlorinated vinyl chloride copolymer resin has a weight average molecular weight of greater than 150,000 Daltons.

2. The extruded pipe of claim 1, wherein said vinyl component comonomer is selected from ethylene, propylene, isobutylene, or mixtures thereof.

3. The extruded pipe of claim 1, wherein the co-monomer is present at from 0.01 % to 10 % of the total monomers in the chlorinated vinyl chloride copolymer resin.

4. The extruded pipe of any previous claim wherein the resin has a chlorine content of between 57 wt.% and 70 wt.%.

5. The extruded pipe of claim 4, wherein the resin is a UV-chlorinated resin.

6. The extruded pipe of claim any previous claim, wherein the compound additionally comprises a low Mw chlorinated vinyl chloride (co)polymer resin having an Mw of 150,000 Daltons or less in a blend with the chlorinated vinyl chloride copolymer resin, and wherein the average Mw of the resin blend is greater than 150,000 Daltons.

7. The extruded pipe of claim 6, wherein the ratio of the chlorinated vinyl chloride copolymer resin to the low Mw chlorinated vinyl chloride (co)polymer resin is greater than 1:4.

8. A method of imparting processability to a chlorinated vinyl chloride polymer resin having an Mw of greater than 150,000 Daltons comprising preparing the chlorinated vinyl chloride polymer resin from vinyl chloride co-monomer and ethylene co-monomer, wherein the ethylene co-monomer comprises from 0.01 % to 8 % of the co-monomers in the vinyl chloride copolymer resin, and post-chlorinating the resultant polymer.

## Patentansprüche

1. Extrudiertes Rohr, umfassend eine Verbindung, die ein chloriertes Vinylchlorid-Copolymerharz umfasst, das einen Hauptanteil Vinylchlorid-Monomer und einen kleineren Anteil eines Vinylkomponente-Comonomers umfasst, wobei das chlorierte Vinylchlorid-Copolymerharz ein Gewichtsmittel des Molekulargewichts von mehr als 150 000 Dalton aufweist.

2. Extrudiertes Rohr gemäß Anspruch 1, wobei das Vinylkomponente-Comonomer aus Ethylen, Propylen, Isobutylen oder Gemischen davon ausgewählt ist.

3. Extrudiertes Rohr gemäß Anspruch 1, wobei das Comonomer in einem Anteil von 0,01 bis 10% der Gesamtmonomere in dem chlorierten Vinylchlorid-Copolymerharz vorhanden ist.

4. Extrudiertes Rohr gemäß einem der vorstehenden Ansprüche, wobei das Harz einen Chlorgehalt zwischen 57 Gew.-% und 70 Gew.-% aufweist.

5. Extrudiertes Rohr gemäß Anspruch 4, wobei das Harz ein UV-chloriertes Harz ist.

6. Extrudiertes Rohr gemäß einem der vorstehenden Ansprüche, wobei die Verbindung zusätzlich ein niedermolekulares chloriertes Vinylchlorid-(Co)polymerharz mit einem Mw von 150 000 Dalton oder weniger in einem Gemisch mit dem chlorierten Vinylchlorid-Copolymerharz umfasst und wobei das mittlere Mw des Harzgemischs größer als 150 000 Dalton ist.

7. Extrudiertes Rohr gemäß Anspruch 6, wobei das Verhältnis des chlorierten Vinylchlorid-Copolymerharzes zu dem niedermolekularen chlorierten Vinylchlorid-(Co)polymerharz größer als 1:4 ist.

8. Verfahren, um einem chlorierten Vinylchlorid-Polymerharz mit einem Mw von mehr als 150 000 Dalton Verarbeitbarkeit zu verleihen, umfassend das Herstellen des chlorierten Vinylchlorid-Polymerharzes aus Vinylchlorid-Comonomer und Ethylen-Comonomer, wobei das Ethylen-Comonomer 0,01% bis 8% der Comonomere in dem Vinylchlorid-Copolymerharz ausmacht, und das Nachchlorieren des resultierenden Polymers.

## Revendications

1. Tuyau extrudé comprenant un composé comprenant une résine copolymère de chlorure de vinyle surchloré comprenant une majeure partie de monomère de chlorure de vinyle et une partie mineure de co-monomère à constituant vinyle, dans lequel ladite résine copolymère de chlorure de vinyle surchloré présente une masse moléculaire moyenne en masse supérieure à 150 000 Daltons.

2. Tuyau extrudé selon la revendication 1, dans lequel ledit co-monomère à constituant vinyle est choisi parmi l'éthylène, le propylène, l'isobutylène, ou des mélanges de ceux-ci.

3. Tuyau extrudé selon la revendication 1, dans lequel le co-monomère est présent à raison de 0,01 % à 10 % des monomères totaux dans la résine copolymère de chlorure de vinyle surchloré.

4. Tuyau extrudé selon l'une quelconque des revendications précédentes dans lequel la résine présente une teneur en chlore comprise entre 57 % en masse et 70 % en masse.

5. Tuyau extrudé selon la revendication 4, dans lequel la résine est une résine chlorée et traitée aux UV.

6. Tuyau extrudé selon l'une quelconque des revendications précédentes, dans lequel le composé comprend en outre une résine (co)polymère de chlorure de vinyle surchloré de faible Mw ayant une Mw de 150 000 Daltons ou moins dans un mélange avec la résine copolymère de chlorure de vinyle surchloré, et dans lequel la Mw moyenne du mélange de résine est supérieure à 150 000 Daltons.

7. Tuyau extrudé selon la revendication 6, dans lequel le rapport entre la résine copolymère de chlorure de vinyle surchloré et la résine (co)polymère de chlorure de vinyle surchloré de faible Mw est supérieur à 1:4.

8. Procédé pour conférer une processabilité à une résine polymère de chlorure de vinyle surchloré présentant une Mw supérieure à 150 000 Daltons comprenant la préparation de la résine polymère de chlorure de vinyle surchloré à partir d'un co-monomère de chlorure de vinyle et d'un co-monomère d'éthylène, dans lequel le co-monomère d'éthylène comprend de 0,01 % à 8 % des co-monomères dans la résine copolymère de chlorure de vinyle, et la postchloration du polymère résultant.
